## Europäisches Patentamt

(19) **European Patent Office**

**Office européen des brevets**

(11) Publication number: **0 025 099**
**B1**

(12) # EUROPEAN PATENT SPECIFICATION

(45) Date of publication of patent specification: **13.04.83**

(51) Int. Cl.³: **C 01 B 31/08, C 01 B 31/14**

(21) Application number: **80104080.9**

(22) Date of filing: **14.07.80**

(54) **Process for manufacturing hard granular activated carbon from sub-bituminous coal.**

(30) Priority: **01.08.79 US 62838**

(43) Date of publication of application:
**18.03.81 Bulletin 81/11**

(45) Publication of the grant of the patent:
**13.04.83 Bulletin 83/15**

(84) Designated Contracting States:
**BE DE FR IT NL**

(56) References cited:
**EP - A - 0 002 275**
**EP - A - 0 002 674**
**EP - A - 0 004 044**
**US - A - 3 483 134**
**US - A - 3 539 467**
**US - A - 3 642 657**
**US - A - 4 014 817**

(73) Proprietor: **KENNECOTT CORPORATION**
**Ten Stamford Forum**
**Stamford Connecticut 06905 (US)**

(72) Inventor: **Smudski, Paul Allen**
**19 Alan Court**
**Grand Island New York 14072 (US)**

(74) Representative: **Patentanwälte Grünecker, Dr.
Kinkeldey, Dr. Stockmair, Dr. Schumann, Jakob,
Dr. Bezold, Meister, Hilgers, Dr. Meyer-Plath
Maximilianstrasse 43
D-8000 München 22 (DE)**

Courier Press, Leamington Spa, England.

Process for manufacturing hard granular activated carbon from sub-bituminous coal

The invention relates to a process for making hard granular activated carbon comprising: forming granules from an intermediate stage coal, treating the granules with a dilute aqueous solution of a dilute aqueous acid, decanting excess acid, and drying the granules at least partially to a moisture, including acid, content below 25%, and mixing the treated granules with up to 15% of a carbonaceous binder, reducing the granules to form fine powder, compressing the powder to form shapes, reducing the shapes to reform granules, and thereafter subjecting the reform granules to heat treatment, without charring, until activated.

A process of the above type is known from EP—A—1—2275, in which granular activated carbon is manufactured from briquettes formed from brown coal, from which iron material has been extracted. The initially formed granules are treated in this prior art process with a dilute aqueous solution of inorganic acid ($H_2SO_4$); $H_3PO_4$ or HCl, at a concentration of about 1—10% by weight to reduce the volatile content and thereby increase the fixed carbon content.

The use of inorganic mineral acid requires removal of the acid prior to further processing in order to avoid corrosion of the heat treating equipment. The often elaborate washing procedure which is necessary to effect this removal adds measurably to the cost of production. In addition, subsequent drying of the washed coal is hindered by the residual inorganic acid.

The invention as claimed is intended to remedy these drawbacks and, according to the characterising clause of claim 1, the present invention teaches treating the initially formed granules with a dilute aqueous solution of saturated aliphatic monocarboxylic acid, at a concentration from 2—30%, using sub-bituminous coal as the intermediate stage coal starting material.

The invention as claimed solves the problem of how to produce carbon in an active form within a suitable physical environment — that is, with a suitable pore size, density and hardness together with an outstanding low ash content and improved physical characteristics.

The advantages offered by the invention are mainly a result of the use of saturated aliphatic monocarboxylic organic acids, as taught by the invention. these organic acids are believed to be as effective in fixing volatile carbonaceous materials of intermediate stage coals and in particular of sub-bituminous coal, as are inorganic acids, but such organic acids do not require elaborate washing procedures prior to further processing. Furthermore, due to the fact that these organic acids are carbonaceous materials in their own right, and are not inorganic, failure to remove the totality of the treating organic acid will not lead to a significant increase in the ash content of the products. As already mentioned, it is highly desirable that the ash content be as small a percentage of the total mass of product as is possible, this to improve the physical characteristics of said product. the use of saturated aliphatic monocarboxylic organic acids, as taught by this invention provides for an outstanding low ash content by increasing the overall portion of carbonaceous materials retained in the product during the course of its production. In addition, these inorganic acids are, in general, volatile and can be recovered upon heating of the treated coal. Thus, simple decantation of the organic acid from the coal or a simple rinsing procedure will generally suffice without further washing.

In order to facilitate a clear understanding of this invention, various terms of art employed herein are defined as follows:

Abrasion number—is a measure of the resistance of the activated carbon granules to degrading on being mechanically abraded. It is measured by contacting a sample with steel balls in a pan on a machine and shaking the contents for a given time and determining the resultant particle size distribution and hence the mean particle diameter. The abrasion number is the ratio of the final average (mean) particle diameter to the original average (mean) particle diameter (determined by screen analysis) times 100.

Activated carbon— is a carbon which is "activated" by heating to high temperature preferably with steam or carbon dioxide as the gaseous activating agent in producing an internal porous particle structure.

Activation or activating—means heating coal at high temperatures on the order of about 600°C to about 1100°C in the presence of a gaseous activating agent, as is well known in the art. The heating rate during activation from the minimum activation temperature to the maximum activation temperature may vary widely, e.g., from about 100 to about 1000°C per hour, but usually is nearer 100°C per hour.

Adsorption isotherm—is a measurement of the adsorptive capacity of an adsorbent (viz. granular activated carbon) as a function of the concentration, or pressure, of the adsorbate (viz. $N_2$) at a given temperature. It is defined as the constant temperature relationship between the amount adsorbed per unit weight of adsorbent and the equilibrium concentration, or partial pressure.

Apparent density—is the weight per unit volume of homogeneous granular activated carbon. To assure uniform packing of the granules during measurement, a vibrating trough is used to fill the measuring device.

Ash—is a principal mineral constituent of coal, carbon and pitch. It is normally defined as a weight percent basis after a given amount of sample is reduced to ash.

Average (mean) particle diameter—is a weighted average diameter of a granular activated carbon sample. A screen analysis is run and the average particle diameter is calculated by multiplying the weight of each fraction by its average diameter, adding the products, and dividing by the total weight of the sample. The average diameter of each fraction is taken as the size midway between the sieve opening through which the fraction has passed and the sieve opening on which the fraction was retained. It usually is expressed in mm.

Carbon tetrachloride activity number—is the steady state percentage increase in the weight of a bed of activated carbon after air which has been saturated with carbon tetrachloride at 0°C is passed through the carbon at 25°C. It is expressed as a percentage number.

Charring—means heating coal at low temperatures on the order of about 175°C to about 275°C in the presence of oxygen.

Coking value—is usually expressed as percent residual carbon obtained when a dry sample of coal, tar or pitch is vaporized or pyrolized for a specific time at a specific temperature that limits the available oxygen supply (ASTM Method D-2416). The coking value, expressed as percent residual carbon, indicates the coke forming properties of the material.

Devolatilizing—means heating coal at intermediate temperatures on the order of about 400°C to about 600°C in an oxygen-free atmosphere.

Direct activation or directly activating—means heating a coal, preferably in a granular form, directly (without prior charring and devolatilization) and rapidly (at a heating rate of about 500°C per hour or more) to an activating temperature higher than the devolatilization temperature (of the order of 600° to 1100°C) in an atmosphere containing a gaseous activating agent and maintaining the desired activating temperature for the desired period of time.

Granular activated carbon—is "activated carbon" which has a particle size, i.e., "mesh", which is not less than about 60 and preferably not less than about 40.

Iodine number—is the milligrams of iodine adsorbed by one gram of granular activated carbon at an equilibrium filtrate concentration of 0.02 N iodine. It is measured by contacting a single sample of carbon with an iodine solution and extrapolating to 0.02 N by an assumed isotherm slope. This number can be correlated with the ability of granular activated carbon to adsorb low molecular weight substances.

Mesh—(or mesh size) is the particle size of granules as determined by the U.S. Sieve Series or the Tyler Series. Usually, this term refers to the sizes of the two screens, in either of the above Series, between which the bulk of a sample falls. For example, "8/30 mesh" (or "8 by 30 mesh" or "8×30 mesh") means that 90% by weight of the sample will pass through a No. 8 screen but will be retained on a No. 30 screen. Likewise, 6/0 mesh means that 90% by weight will pass through a No. 6 screen, with no lower limit on granular size. Alternatively, this term refers to a maximum particle size, such as in defining the fineness of powder material. For example, "65% by weight—325 mesh powder" means that 65% by weight of a given sample passes through a No. 325 mesh screen.

Molasses number—is calculated from the ratio of the optical densities of the filtrate of a molasses solution treated with a standard activated carbon and the activated carbon in question.

Pitch—is a black or dark viscous substance obtained as a residue in the distillation of organic materials and especially tars.

Powder—means powdered activated carbon which has a particle size, i.e., "mesh", which is smaller than about 40 and preferably smaller than about 60. The larger the mesh number, the smaller the size.

Sub-bituminous coal—is an intermediate stage coal which ranks above lignite and brown coals, but below bituminous coal. In the as received condition it has, by weight, (1) a proximate analysis of: from about 10% to about 25% moisture, from about 35% to about 45% volatile material, from about 2% to about 5% ash, and from about 25% to about 45% fixed carbon, and (2) an ultimate analysis of: from about 65% to about 75% carbon, from about 4% to about 8% hydrogen, from about 0.5% to about 2.0% nitrogen, and from about 0.5% to about 1.0% sulfur. See ASTM Standard D-388-66.

Surface area—is the amount of surface area per unit weight of granular activated carbon; it is determined from the nitrogen adsorption isotherm by the Brunauer, Emmett and Teller (BET) method, and it is expressed in $m^2$/gram.

Volumetric Iodine and Molasses Numbers—are determined by multiplying by the apparent density, in order to express these properties independently of such density.

According to a preferred embodiment of the present invention the saturated aliphatic monocarboxylic acid is formic acid, which, in a further preferred embodiment of the present invention is at a concentration of from 3—6% by weight. According to another preferred embodiment of the present invention the treating acid is acetic. Preferably, the concentration of this acetic acid is from 10—20% by weight. Preferably, the granules as treated with said acetic acid are mixed with 5—15% by weight of a carbonaceous binder.

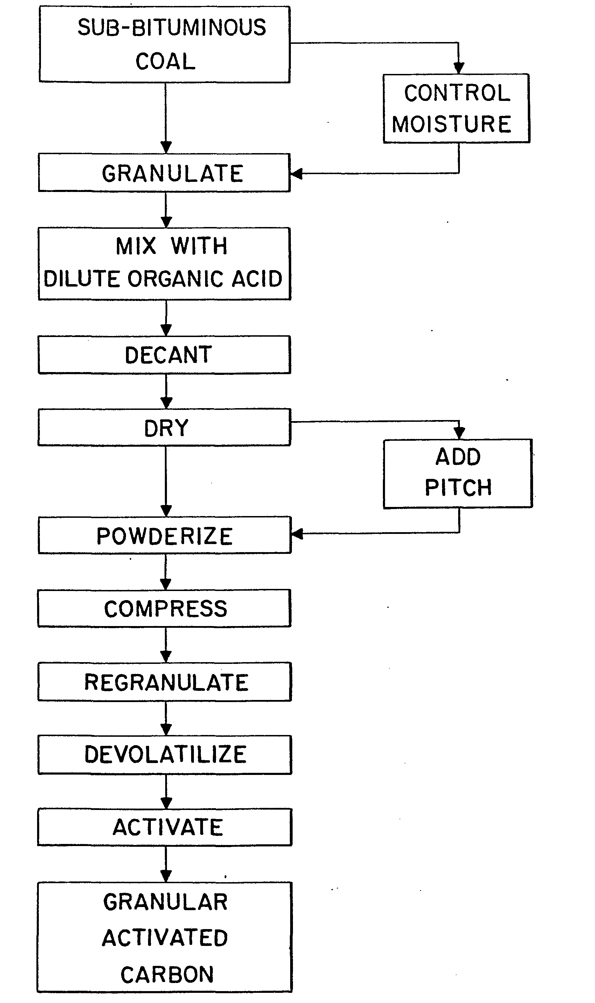

Ways of carrying out the invention are described in detail below with reference to the drawing which is a block diagram of flow sheet illustrating schematically the various depths of the process as well as the resulting product, both embodying the invention.

Example 1
(No acid+pitch)

The starting material for this and each of the following examples was a batch of Wyoming sub-bituminous (Elkol) coal, that being used in this Example having the following analysis, percent by weight, in the as received and dry-conditions respectively:

Proximate analysis

| Constituents | As received | Dry |
|---|---|---|
| Moisture | 15.1 | — |
| Volatile Material | 37.1 | 43.70 |
| Ash | 2.92 | 3.44 |
| Fixed Carbon | 44.88 | 52.86 |

2000 grams of coal granules having a mesh size of 8/30 and 220 grams of coal tar pitch (10%) were blended by stirring together in a Hobart mixer for approximately 10 minutes. The mixture was pulverized in a hammer mill to produce a fine powder of 81%—325 mesh. This powder was compressed into cylindrical pellets of 12.7 mm diameter by 12.7 mm height at 551,6 MPa psi to an apparent density of 1.2 g/cm³, with the pellets being crushed in a jaw mill and screened to reform and collect granules of 6/20 mesh size. These reformed granules then were devolatilized as follows.

600 grams were placed in a stainless steel screen basket which was rotated within a tube furnace at about 2 rpm. The furnace was constructed such that the gaseous environment of the basket and granules could be controlled. The granules were heated to about 600°C while in an inert gas atmosphere of nitrogen or argon. This temperature and atmosphere were maintained for 1 hour, after which time the material was allowed to cool to room temperature. 336 grams of carbonized (devolatilized) material with an apparent density of 0.629 g/cm³ were obtained, giving a yield on devolatilization of 56%.

300 grams of this material were activated as follows: The granules were placed in a controlled atmosphere rotary kiln and were heated to a temperature of 870°C under a nitrogen flow, at which time steam carried by the flowing nitrogen was passed through the system at a rate corresponding to about 800 grams of water per hour. This was continued for a period of 30 minutes, after which time the material was allowed to cool to room temperature under flowing nitrogen. 153 grams of granular activated carbon were obtained, with an activation yield of 51.0%, and an overall yield of 28.6% (51.0×56/100). The product had the following properties: apparent density 0.501 g/cm³. Iodine number 722 (722×.501=361 volumetric); Molasses number 249

(249×.501=125 volumetric); abrasion number 83; ash content 6.28%, and mean particle diameter 1.58 mm.

As will be evident, this material was not suitable for liquid phase applications, because of its low Iodine number.

Example 2
(5% Formic acid+pitch)

The sub-bituminous coal employed in this Example had the following analysis:

Proximate analysis

| Constituents | As received | Dry |
|---|---|---|
| Moisture | 17.40 | — |
| Volatile Material | 38.20 | 46.25 |
| Ash | 2.44 | 2.95 |
| Fixed Carbon | 41.95 | 50.79 |

The procedure of Example 1 was repeated, except as follows. 800 grams of 6/20 mesh granules were stirred for 1 hour at 95°C with an aqueous solution of 150 cm³ of 90% formic acid in 3020 cm³ of water (about 5.1% acid and about 4/1 solution to coal ratio). The acid was decanted from the coal, which was quickly rinsed with water and decanted again. The treated coal was dried at 120°C for 1/2 hour to a moisture content of about 2 or 3%, with 1592 grams of the dried coal being mixed with 102 grams of coal tar pitch (6% pitch), and this mixture was ground in a hammer mill to yield a fine powder of 77%—325 mesh. The powder then was compressed into the aforesaid cylindrical pellets in a hydraulic press operating at 551,6 MPa which pellets were then crushed into granules, those of 6/20 mesh being collected.

600 grams of the reformed granules were devolatilized as in Example 1, and following cooling to room temperature, 296 grams of the devolatilized material having an apparent density of 0.635 g/cm³ were produced at a yield of 49.3%.

Next, 300 grams of this material were activated as in Example 1, but the temperature was increased to 1000°C, with the steam rate corresponding to 750 cm³ of water per hour and the temperature maintained over a period of 1/2 hour.

147 grams (activation yield 49.7%, overall yield 24.5%) of granular activated carbon having the following properties were produced: apparent density 0.495 g/cm³; abrasion number 84; mean particle diameter 1.46 mm; Iodine number 918 (volumetric 454); Molasses number 231 (volumetric) 107; and ash content 6.9%. Thus, the product was well suited in all respects for use in liquid phase applications.

During the course of experimentation, the following were learned. The size of the granules being acid treated, temperature of treatment (which usually is below 100°C because of the use of the dilute aqueous acid solution), time of treatment, concentration of acid and the ratio of dilute aqueous acid solution to coal all have important effects on further processability of the coal to form granular activated carbon. Therefore, the specific members cited in this and in the ensuing inventive Examples are merely illustrative and not restrictive. For example, both coarser and finer granules can be employed during treatment with corresponding results, with the time of treatment being longer for coarser particles and shorter for finer particles. Likewise, the lower the temperature the longer the time, and vice versa. In addition, the lower the concentration of acid, the longer the time, and vice versa, while the solution to coal ratio probably should not be less than about 1/1. Generally speaking then, these parameters should be sufficient for further processing of the coal to form granular activated carbon.

Moreover, this acid treatment is believed to have a beneficial effect on the coal resulting in increased activity, as will be evident from the substantial increase in the Iodine number from 722 in Example 1 to well over 900 in this and in each of the remaining inventive Examples. Expressed in percentages, the Iodine number was increased by at least 25% (this Example) and as much as 45% (Example 4).

Example 3
(3.5% Formic acid+pitch)
The sub-bituminous coal used herein had the following analysis:

Proximate analysis

| Constituents | As received | Dry |
|---|---|---|
| Moisture | 18.67 | — |
| Volatile Material | 35.84 | 44.07 |
| Ash | 2.43 | 2.99 |
| Fixed Carbon | 43.06 | 52.94 |

The procedure of Example 2 essentially was repeated, with the following differences. 800 grams of coal were stirred for 1 hour at 80—85°C with an aqueous solution of 105 cm³ of 90% formic acid in 3195 cm³ of water (about 3.5% acid and over 4/1 solution to coal ratio). The acid solution then was decanted (no rinsing), and the treated coal dried for 8 hours in an oven at 110°C to a moisture content of about 2 or 3%. 1368 grams of the treated coal were mixed together with 150 grams of coal tar pitch (9.9%). From 600 grams of the reformed granules, 340 grams of devolatilized material was obtained having an apparent density of 0.650 g/cm³ producing a devolatilization yield of 56%.

300 grams of the devolatilized granules were then activated by heating to 880°C under a nitrogen flow, at which time steam carried by the flowing nitrogen was passed through the system at a rate corresponding to 600 cm³ of water per hour, this was continued for a period of 2 hours. Following cooling to room temperature, 168 grams of granular activated carbon were obtained, producing an activation yield of 56% and an overall yield of 32%. The excellent physical properties were: apparent density 0.479 g/cm³ abrasion number 90; mean particle diameter 1.67 mm; Iodine number 973 (volumetric 466); Molasses number 245 (volumetric 117); and ash content 7.85%.

Example 4
(5% Formic acid—no pitch)
The sub-bituminous coal used in this Example had the following analysis:

Proximate analysis

| Constituents | As received | Dry |
|---|---|---|
| Moisture | 17.67 | — |
| Volatile Material | 40.61 | 49.35 |
| Ash | 3.43 | 4.17 |
| Fixed Carbon | 38.25 | 46.48 |

800 grams of coal sized 6/0 mesh were stirred for 1 hour at 90—100°C together with an aqueous solution of 152 cm³ of 88% formic acid in 3000 cm³ of water (approximately 5% acid by weight and about 4/1 solution to coal ratio). The acid solution was then decanted, and the treated coal dried at about 120°C until surface dry, i.e., about 10% to about 15% moisture. 1672 grams of the treated coal were milled in a hammer mill to yield a fine powder of 69%—325 mesh. This powder was pressed into cylindrical pellets utilizing a hydraulic press operating at 689,5 MPa, pellets were then crushed into granules, of which 6/20 mesh were collected.

662 grams of the 6/20 mesh granules were placed into a stainless steel mesh basket located within a tube furnace as described in Example 1. The granules were rotated and heated to 450°C while in an inert atmosphere of nitrogen or argon. This temperature and atmosphere were maintained for 1 hour, at which time the material was cooled to room temperature. 399 grams of devolatilized material with an apparent density of 0.674 g/cm³ were obtained, this corresponding to a devolatilization yield of 60.3%. 300 grams of this material were activated as follows:

The granules were placed in a controlled atmosphere rotary kiln as described above. They were then heated to 1020°C under a nitrogen flow, at which time steam carried by flowing nitrogen was passed through the system at a rate corresponding to 750 cm³ of water per hour. This was continued for 52 minutes. The material was allowed to cool to room temperature under a nitrogen atmosphere to produce 116 grams of granular activated carbon corresponding to an activation yield of 38.7% and an overall yield of 23.3%. The activated carbon had the following properties: apparent density 0.503 g/cm³ abrasion number 84; mean particle diameter 1.49 mm; Iodine number 1050 (volumetric 528); Molasses number 253 (volumetric 127); and ash content 9.4%.

## Example 5
(Acetic acid+pitch)

The sub-bituminous coal in this Example had the following approximate analysis:

### Proximate analysis

| Constituents | As received | Dry |
|---|---|---|
| Moisture | 17.40 | — |
| Volatile Material | 38.20 | 46.25 |
| Ash | 2.44 | 2.95 |
| Fixed Carbon | 41.95 | 50.79 |

A procedure similar to Examples 2 and 3 was followed, with the following exceptions, particularly the substitution of acetic acid for formic acid. 800 grams of granules of 6/0 mesh were stirred for 1 hour at 80—90°C with an aqueous solution of 455 cm³ of glacial acetic acid in 2770 cm³ of water (about 14% acid and about 4/1 solution to coal ratio). The acid solution was decanted and the treated coal dried to a moisture level of about 16%. 1737 grams of the treated coal were mixed together with 111 grams of coal tar pitch (6% pitch), which mixture was ground in a hammer mill to yield a fine powder. Following pelletizing and reforming of granules, 600 grams were placed in a rotating tube furnace and heated to 450°C while in an inert atmosphere of nitrogen, which was maintained for 1 hour, at which time the material was cooled to room temperature. 300 grams of devolatilized 6/20 granules were produced, having an apparent density of 0.651 g/cm³ with a devolatilization yield of 50%.

300 grams of the devolatilized granules were activated in a controlled atmosphere rotary kiln, as described above, the granules being heated to 870°C under a nitrogen flow, at which time steam carried by the flowing nitrogen was passed through the system at a rate corresponding to 700 cm³ of water per hour, and this was continued for 170 minutes. After cooling to room temperature under nitrogen, 131 grams of granular activated carbon of +30 mesh were produced, with an activation yield of 44%, and an overall yield of 22%. The product had the following properties: apparent density 0.522 g/cm³; abrasion number 82; mean particle diameter 1.46 mm; Iodine number 922 (volumetric 481); Molasses number 247 (volumetric 128.9); and ash content 8.09%.

From the foregoing specific Examples, it is evident that hard granular activated carbon suitable for use in liquid phase applications, such as water and waste water treatment can be obtained by treatment with a dilute aqueous solution of saturated aliphatic monocarboxylic acid, such as formic acid and acetic acid, with formic acid being preferred. In addition, other saturated aliphatic monocarboxylic acids can be utilized in the practice of the invention, such as propanoic, butanoic, pentanoic and hexanoic acids, with the acid concentration required being increased with the decrease in strength of the acid.

## Claims

1. A process for making hard granular activated carbon comprising: forming granules from an intermediate stage coal, treating the granules with a dilute aqueous solution of a dilute aqueous acid, decanting excess acid, and drying the granules at least partially to a moisture including acid, content below 25%, and mixing the treated granules with up to 15% of a carbonaceous binder, reducing the granules to form fine powder, compressing the powder to form shapes, reducing the shapes to reform granules, and thereafter subjecting the reformed granules to heat treatment, without charring, until activated, characterised by forming said granules from sub-bituminous coal and treating these initially formed granules with a dilute aqueous solution of saturated aliphatic monocarboxylic acid, at a concentration from 2—30%.

2. The process of claim 1, wherein the acid is formic acid.

3. The process of claim 2, wherein the concentration of the formic acid is from 3—6%.

4. The process of claim 1, wherein the acid is acetic acid.

5. The process of claim 4, wherein the concentration of the acetic acid is from 10—20% by weight.

6. The process of claim 5, wherein the treated granules are mixed with 5—15% by weight of a carbonaceous binder.

## Patentansprüche

1. Verfahren zum Herstellen von harter, körniger Aktivkohle, bei welchem aus einer mittelwertigen Kohle Körner hergestellt und dieser Körner mit einer verdünnten wässrigen Lösung einer verdünnten wässrigen Säure behandelt werden, überschüssige Säure dekantiert und die Körner wenigstens teilweise auf einen Feuchtigkeitsgehalt unter einschluß der Säure von weniger als 25% getrocknet und die derart behandelten Körner mit bis zu 15% eines kohlenstoffhaltigen Bindemittels vermischt werden, die Körner zwecks Herstellung eines feinen Pulvers zerkleinert und das Pulver zu Formlingen verpreßt wird, die Formlinge zur erneuten Herstellung von Körnern zerkleinert werden und anschließend die wiederum gebildeten Körner einer Wärmebehandlung, ohne Verkohlung, bis zur Aktivierung, unterworfen werden, dadurch gekennzeichnet, daß die Körner aus sub-bituminöser Kohle hergestellt werden und diese anfänglich gebildeten Körner mit einer verdünnten wässrigen Lösung einer gesättigten aliphatischen Monocarboxylsäure in einer Konzentration von 2 bis 30% behandelt werden.

2. Verfahren nach Anspruch 1, dadurch gekennzeichnet, daß als Säure Ameisensäure verwendet wird.

3. Verfahren nach Anspruch 2, dadurch gekennzeichnet, daß eine 3 bis 6 %ige Ameisensäure verwendet wird.

4. Verfahren nach Anspruch 1, dadurch gekennzeichnet, daß als Säure Essigsäure verwendet wird.

5. Verfahren nach Anspruch 4, dadurch gekennzeichnet, daß eine 10 bis 20 %ige Essigsäure verwendet wird.

6. Verfahren nach Anspruch 5, dadurch gekennzeichnet, daß die behandelten Körner mit 5 bis 15 Gew.-% eines kohlenstoffhaltigen Bindemittels vermischt werden.

## Revendications

1. Procédé de production de charbon actif granulaire et dur, consistant: à former des granulés à partir d'un charbon de classe intermédiaire, à traiter les granulés avec une solution aqueuse diluée d'un acide aqueux dilué, à séparer par décantation l'acide en excès et à sécher les granulés au moins partiellement à une teneur en humidité, y compris l'acide, inférieure à 25%, et à mélanger les granulés traités avec jusqu'à 15% d'un liant carboné, à réduire les granulés pour former une poudre fine, à comprimer la poudre pour donner des formes, à réduire les formes pour reformer des granulés et à soumettre ensuite les granulés reformés à un traitement thermique, sans carbonisations, jusqu'à ce qu'ils soient activés, caractérisé par la formation desdits granulés à partir de charbon sub-bitumineux et traitement de ces granulés, initialement formés, avec une solution aqueuse diluée d'acide aliphatique monocarboxylique saturé, à une concentration de 2—30%.

2. Procédé de la revendication 1 dans lequel l'acide est l'acide formique.

3. Procédé de la revendication 2 dans lequel la concentration de l'acide formique est de 3—6%.

4. Procédé de la revendication 1 dans lequel l'acide est l'acide acétique.

5. Procédé de la revendication 4 dans lequel la concentration de l'acide est de 10—20% en poids.

6. Procédé de la revendication 5 dans lequel les granulés, traités sont mélangés avec 5—15% en poids d'un liant carboné.

0 025 099

```
        ┌─────────────────────┐
        │   SUB-BITUMINOUS    │────────────┐
        │       COAL          │            │
        └─────────────────────┘        ┌───────────┐
                  │                     │  CONTROL  │
                  │                     │ MOISTURE  │
                  ▼                     └───────────┘
        ┌─────────────────────┐            │
        │     GRANULATE       │◄───────────┘
        └─────────────────────┘
                  │
                  ▼
        ┌─────────────────────┐
        │     MIX  WITH       │
        │ DILUTE ORGANIC ACID │
        └─────────────────────┘
                  │
                  ▼
        ┌─────────────────────┐
        │      DECANT         │
        └─────────────────────┘
                  │
                  ▼
        ┌─────────────────────┐
        │        DRY          │───────────┐
        └─────────────────────┘       ┌───────────┐
                  │                    │    ADD    │
                  │                    │   PITCH   │
                  ▼                    └───────────┘
        ┌─────────────────────┐            │
        │     POWDERIZE       │◄───────────┘
        └─────────────────────┘
                  │
                  ▼
        ┌─────────────────────┐
        │     COMPRESS        │
        └─────────────────────┘
                  │
                  ▼
        ┌─────────────────────┐
        │    REGRANULATE      │
        └─────────────────────┘
                  │
                  ▼
        ┌─────────────────────┐
        │    DEVOLATILIZE     │
        └─────────────────────┘
                  │
                  ▼
        ┌─────────────────────┐
        │     ACTIVATE        │
        └─────────────────────┘
                  │
                  ▼
        ┌─────────────────────┐
        │      GRANULAR       │
        │     ACTIVATED       │
        │      CARBON         │
        └─────────────────────┘
```

1